(19) Europäisches Patentamt
European Patent Office
Office européen des brevets

(11) EP 0 461 703 B1

(12) EUROPÄISCHE PATENTSCHRIFT

(45) Veröffentlichungstag und Bekanntmachung des Hinweises auf die Patenterteilung:
30.07.1997 Patentblatt 1997/31

(51) Int Cl.6: H04L 25/36

(21) Anmeldenummer: 91201365.3

(22) Anmeldetag: 04.06.1991

(54) Schaltungsanordnung zur Bitratenanpassung

Circuit for bit-rate adaption

Circuit d'adaption de débit binaire

(84) Benannte Vertragsstaaten:
DE FR GB

(30) Priorität: 09.06.1990 DE 4018539

(43) Veröffentlichungstag der Anmeldung:
18.12.1991 Patentblatt 1991/51

(73) Patentinhaber: Lucent Technologies Inc.
Murray Hill, New Jersey 07974-0636 (US)

(72) Erfinder: Urbansky, Ralph, Dr.
W-8501 Schwaig 2 (DE)

(74) Vertreter: Tergau, Enno, Dipl.-Ing. et al
Tergau & Pohl
Patentanwälte
Mögeldorfer Hauptstrasse 51
90482 Nürnberg (DE)

(56) Entgegenhaltungen:
EP-A- 0 231 711          EP-A- 0 342 510

**Beschreibung**

Die Erfindung betrifft eine Schaltungsanordnung zur Bitratenanpassung zweier Signale, von denen das Signal mit höherer Bitrate nach Rahmen strukturiert ist, wobei zur Einordnung von positiven oder negativen Stopfbits zwischen die Bits des Signals mit niederer Bitrate ein Pufferspeicher, ein Schreib- und ein Lesezähler sowie ein Phasenvergleicher und eine Steuerschaltung vorgesehen sind.

Schaltungsanordnungen zur Bitratenanpassung werden in der Nachrichtenübertragung zum Beispiel in plesiochronen Multiplexern benötigt, die plesiochrone Signale bündeln. Zwei binäre Signale heißen plesiochron, wenn ihre Bitraten nominell gleich sind, tatsächlich aber innerhalb einer gegebenen Toleranz vom Nennwert abweichen können. Bevor plesiochrone Signale durch einen plesiochronen Multiplexer zusammengefaßt werden können, müssen sie alle - z.B. durch eine Schaltungsanordnung mit dem angegebenen Merkmalen - auf die gleiche (etwa 10% höhere) Bitrate gebracht werden. Das Verhältnis der Eingangsbitrate zur Rahmenfrequenz gibt die Anzahl der Bits des Signals mit niederer Bitrate an, die in einem Rahmen eingeordnet werden müssen. Ist dieses Verhältnis für die Nominalwerte der beiden Größen ganzzahlig, werden zwei Techniken unterschieden:
Zum einen die Positiv-Null-Negativ-Stopftechnik und zum anderen die Positiv-Negativ-Stopftechnik.

Ist im ersten Fall die augenblickliche Taktfrequenz des Signals mit niederer Bitrate gleich der Nennbitrate, können alle pro Sekunde ankommenden Bits dieses Signals in die Rahmen des Signals mit höherer Bitrate eingeordnet werden, ohne daß sogenannte positive oder negative Stopfbits (hiermit sind variable Stopfbits gemeint) eingefügt werden müssen.

Gleicht im zweiten Fall die augenblickliche Taktfrequenz des Signals mit niederer Bitrate ihren Nennwert, wechseln sich positive und negative Stopfvorgänge ab.

Ein positives Stopfbit bezeichnet ein Bit ohne Informationsgehalt an einer üblicherweise Informations- oder Datenbit tragenden Stelle, während ein negatives Stopfbit ein Datenbit an einer Position überträgt, die sonst mit einem festen Stopfbit besetzt ist. Die festen Stopfbits dienen der groben Frequenzanpassung und können Hilfs- und Nebeninformationen für den Empfänger enthalten.

In einem Artikel - im folgenden mit (I) zitiert - von Grover et al. (Grover, W.D., Moore, T.E. und Mc Eachern, J.E.: Measured Pulse-Stuffing Jitter in Asynchronous DS-1/Sonet Multiplexing with and without Stuff-Threshold Modulation Circuit, Electronics Letters (1987), Vol. 23, Seiten 959 bis 961) ist eine Schaltungsanordnung angegeben, mit der die oben beschriebenen Stopfvorgänge durchführbar sind. Eine derartige Anordnung besteht aus einem adressierbaren Pufferspeicher, in den mit einem Schreibzähler ein erstes Signal eingeschrieben wird und aus dem mit einem Lesezähler ein zweites Signal wieder ausgelesen wird. Befindet sich die Schaltung auf der Sendeseite, wird das erste Signal mit seinem Bittakt in den Pufferspeicher eingeschrieben und der Schreibzähler mit diesem Takt weitergestellt. Durch eine Steuer- und Kontrollschaltung wird der Lesezähler mit einem Takt angesteuert, in dessen sonst regelmäßigem Flankenraster gewisse Flanken fehlen. Das Muster der fehlenden Flanken spiegelt den Rahmenaufbau wieder. Ein Phasendetektor bildet die Differenz der Schreib- und der Leseadressen, deren Größe überwacht wird und bei Über- oder Unterschreiten einer Schwelle wird ein Signal an die Steuer- und Kontrolleinrichtung abgegeben zum Zeichen dafür, daß in den Rahmen ein positives oder negatives Stopfbit eingefügt werden muß (Stopfanforderung). Die Kontrollschaltung fügt dann in den Lesetakt an einer bestimmten Stelle des Rahmens eine zusätzliche Flanke ein oder löscht eine Flanke aus dem bisher verwendeten Muster.

Ein ähnliches System wird auch in EP-A-0 231 711 beschrieben.

Auf der Empfängerseite des Übertragungssystems ist eine entsprechende Schaltungsanordnung einem plesiochronen Demultiplexer nachzuschalten, um die positiven und negativen Stopfbits wieder zu entfernen und die Bitrate auf ihren ursprünglichen Wert zu bringen. Das Entfernen der Stopfbits erfolgt wiederum über einen Pufferspeicher, in den nur Nutzdaten eingeschrieben werden. Den Lesevorgang steuert eine Phasenregelschleife zur Erzeugung einer möglichst gleichmäßigen (jitterarmen) Taktfrequenz. Mit Jitter wird die Abweichung der Taktflanken von ihrer Sollage bezeichnet. An die Unterdrückung des Jitters werden gemäß CCITT-Empfehlung G. 823 hohe Anforderungen gestellt. Hochfrequente Spektralanteile im Jitter können empfangsseitig durch die Tiefpaßeigenschaft der Phasenregelschleife reduziert werden. Es können jedoch beliebig niederfrequente Spektralanteile des sogenannten Stopfjitters (vgl. hierzu den Artikel von D.L. Duttweiler: Waiting Time Jitter. Bell Syst. Tech. J. 51, (1972), Seiten 165 bis 207) entstehen, deren Amplitude nur beim Stopfvorgang (also auf der Sendeseite) kontrolliert bzw. verringert werden kann.

Zur Verringerung dieses Jitters ist in dem erwähnten Artikel von Grover et al. vorgeschlagen, die Schwelle des Schwellwertdetektors sägezahnförmig zu modulieren.

Der Erfindung liegt die Aufgabe zugrunde, eine Schaltungsanordnung der eingangs genannten Art anzugeben, mit der Stopfjitter durch Kontrolle des Stopfvorganges auf der Sendeseite weitgehend vermieden wird.

Diese Aufgabe wird durch die im Kennzeichen des Anspruchs 1 angegebenen Merkmale gelöst. Vorteilhafte Ausgestaltungen enthalten die Unteransprüche.

Anhand der Figuren und eines Ausführungsbeispiels soll die Erfindung näher erläutert werden.

Es zeigen:

Fig. 1 ein Ersatzschaltbild für eine bekannte Stopfentscheidungsschaltung,

Fig. 2 die Wirkungsweise der Schaltung nach Fig. 1 im z-Bereich,

Fig. 3 die Wirkungsweise einer erfindungsgemäßen Schaltung im z-Bereich und

Fig. 4 das Prinzipschaltbild einer erfindungsgemäßen Schaltungsanordnung zur Bitratenanpassung.

Der erfindungsgemäßen Lösung liegen folgende heuristische Überlegungen zugrunde:

Wie oben dargelegt, wird beim zitierten Stand der Technik die absolute Größe der Differenz der Stände von Schreib- und Lesezähler - also die Phasendifferenz der beiden Signale - überwacht und nach Durchlaufen eines Schwellwertdetektors als Stopfanforderung an die Steuer- und Kontrollschaltung weitergegeben. Diese baut die Stopfanforderung als sogenannte Stopfinformation in den Rahmen des Signals mit höherer Bitrate ein. Der Schwellwertdetektor hat im Falle der Positiv-Null-Negativ-Stopftechnik zwei Schwellen und kann daher drei unterschiedliche Signale, die den Werten -1, 0, +1 entsprechen, abgeben. Im Falle der Positiv-Negativ-Stopftechnik hat er nur eine Schwelle und gibt daher nur die Werte -1 oder +1 ab.

Durch die Stopfinformation erhält der Empfänger eine grob quantisierte Aussage über die relative Phasenlage der beiden Signale auf der Senderseite. Deshalb wird der Schwellwertdetektor im folgenden Quantisierer genannt, der eine Quantisierung der Phasendifferenz durchführt.

Wäre es möglich, die relative Phasenlage genauer anzugeben, also feiner zu quantisieren und zu übertragen, könnte damit die Phasenregelschleife auf der Empfängerseite beeinflußt werden, so daß z.B. im Falle des Auftretens eines positiven Stopfbits dieses auf der Empfängerseite - ohne niederfrequenten Jitter zu erzeugen - entfernt werden könnte.

Mit diesen Überlegungen ist die Aufmerksamkeit auf die Quantisierung der Phasendifferenz zwischen den beiden Signalen auf der Senderseite gelenkt und gibt Anlaß, die Auswirkungen z.B. des Quantisierungsfehlers auf den Jitter genauer zu untersuchen.

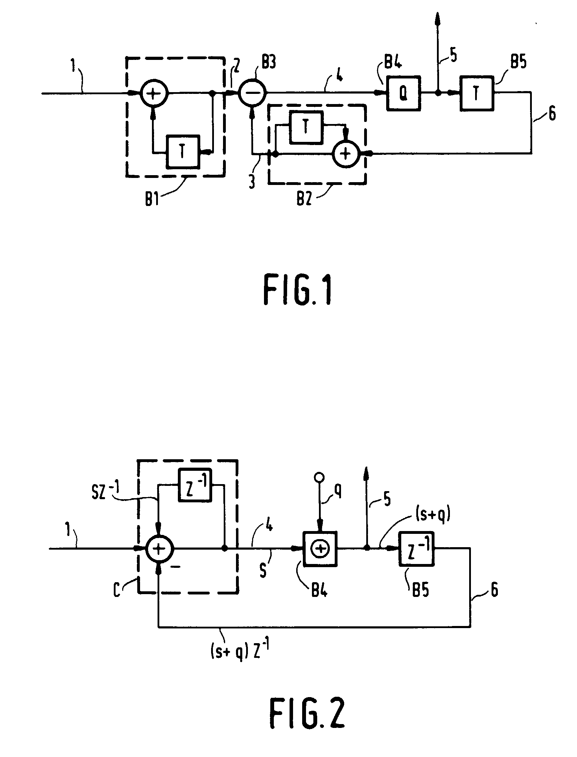

Diesem Zweck dient das Ersatzschaltbild nach Fig. 1. Es gibt die Wirkungsweise der aus (I) bekannten Anordnung aus einem anderen Blickwinkel wieder. Die Schaltung nach Fig. 1 wird mit dem Rahmentakt getaktet. Auf einer Leitung 1 liegt die momentane Stopfrate an. Das ist die diejenige Zahl der Bits, die in dem momentan zu füllenden Rahmen als Stopfbits eingesetzt werden müßten, um die Phasendifferenz der beiden Signale möglichst klein zu halten. In der Regel sind das Bruchteile von Bits, die von Rahmen zu Rahmen durch einen Akkumulator B1, bestehend aus einem Addierer und einem Verzögerungsglied, laufend aufaddiert werden. Von dieser Summe werden die tatsächlichen gestopften Bits durch einen Subtrahierer B3 abgezogen. Die tatsächlich pro Rahmen gestopften Bits, die der Phasenkorrektur der beiden Signale dienen, werden dem Subtrahierer B3 vom Ausgang eines Akkumulators B2 zugeführt. Der Akkumulator B2 akkumuliert die Phasenkorrekturen, die pro Stopfbit vorgenommen worden sind. Die Differenz, also das Ausgangssignal des Subtrahierers B3, gibt zahlenmäßig die momentane Phasenlage der beiden Signale wieder. Diese durchläuft einen Quantisierer B4, dessen Ausgangssignal über eine Leitung 5 an den Empfänger als Stopfinformation übertragen wird. Da nach Übertragung der Stopfinformation auf der Empfängerseite die Phasenkorrektur erst einen Rahmen später vorgenommen wird, durchläuft die Stopfinformation auch auf der Senderseite ein Verzögerungsglied B5, das sein Eingangssignal um eine Rahmentaktperiode verzögert.

Fig. 2 zeigt die Wirkungsweise der Schaltung nach Fig. 1 auf die z-Transformierten aller Signale (zur z-Transformation vgl. zum Beispiel H. W. Schüßler: Digitale Signalverarbeitung. Band 1. Springer-Verlag Berlin, Heidelberg, New York, London, Paris, Tokyo 1988). Die Funktionseinheiten B1, B2 und B3 der Fig. 1 werden in ihrer Wirkung auf die z-Transformierten durch eine einzige Funktionseinheit C der Fig. 2 wiedergegeben, die aus einem Summierglied mit drei Eingängen besteht, von denen einer invertierend ist (Vorzeichenumkehr). Der Ausgang des Summiergliedes ist über ein Verzögerungsglied mit einem nichtinvertierenden Eingang verbunden. An den nichtinvertierenden Eingang ist das Signal der Rückkopplungsschleife 6 angelegt und dem drittem Eingang wird das Eingangssignal 1 zugeführt. Die Korrespondenz zwischen den restlichen Funktionseinheiten der Fig. 2 mit denen der Fig. 1 ist durch die Verwendung gleicher Bezugszeichen hergestellt.

In Fig. 2 ist der Quantisierer jedoch durch ein lineares Modell nachgebildet worden: Dem beliebig genauen Signal wird ein Störsignal q überlagert, dessen Wirkung näherungsweise dem des Quantisierungsfehlers gleicht und dessen Wirkung auf den Stopfjitter reduziert werden soll. Bestimmt man nun die Übertragungsfunktion $Hq$ im z-Bereich, die sich bei verschwindendem Eingangssignal 1 für das Störsignal q zur Leitung 5 (auf der die Stopfinformation weitergeleitet wird) ergibt, erhält man

$$Hq = \frac{z-1}{z} \ . \qquad (1)$$

Der Übertragungsweg hat folglich differenzierende Wirkung auf das Störsignal q. Bei der Differentiation eines Signals werden jedoch die spektralen Anteile kleiner Frequenzen erniedrigt (wegen der Multiplikation mit der Frequenz), so daß sich folgender prinzipieller Weg zur Unterdrückung der niederfrequenten Anteile im Stopfjitter eröffnet: Man verändere den Signalweg für das Störsignal q zur Stopfinformationsleitung 5 in Fig. 2 derart, daß es auf diesem Weg mehrmals differenziert wird und damit die niederfrequenten Anteile stärker unterdrückt werden als bei einmaliger Differentiation. Als Folge davon werden auch im Stopfjitter die niederfrequenten Anteile unterdrückt, soweit der Stopfjitter dem niederfrequenten Anteil des Störsignales q direkt proportional ist.

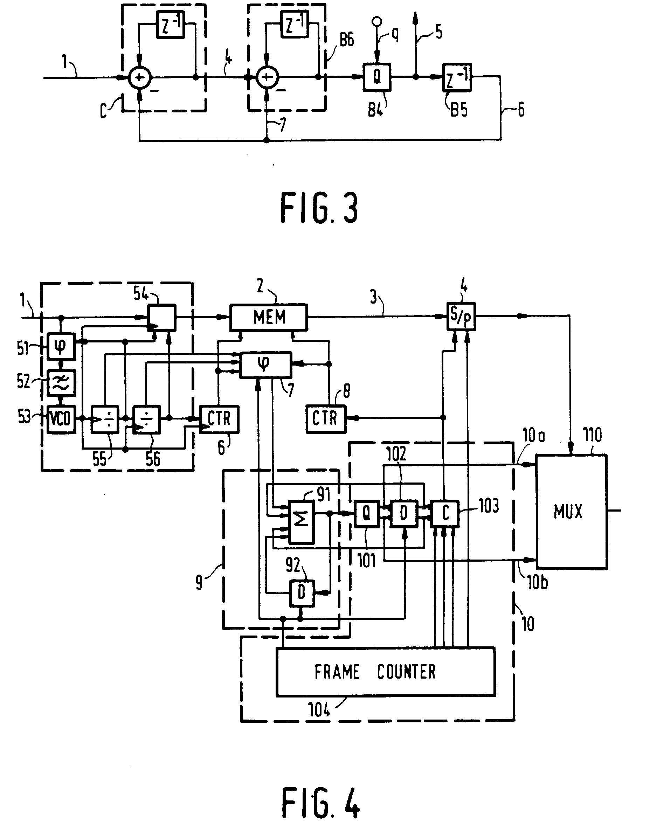

Fig. 3 stellt eine solche Veränderung der Schaltung nach Fig. 2 dar. Sie unterscheidet sich von der in Fig. 2 durch eine zusätzliche Einheit B6, die das Eingangssignal des Quantisierers B4 verändert. Die Einheit B6 besteht wiederum aus einem Summierglied mit drei Eingängen, von denen einer invertierend ist. Dem einen nichtinvertierenden Eingang wird das Ausgangssignal der Einheit C zugeführt, während der andere nichtinvertierende Eingang über ein Verzögerungsglied mit dem Ausgang des Summiergliedes verbunden ist. Dem invertierenden Eingang wird das Ausgangssignal der Einheit B5 zugeführt.

Für die Fig. 3 hat die Übertragungsfunktion im z-Bereich für das Störsignal zur Leitung 5 nun die Gestalt

$$Hq = \frac{(z\text{-}1)^2}{z^2}\,. \qquad (2)$$

Die Anordnung differenziert das Störsignal zweimal, so daß eine verstärkte Unterdrückung des niederfrequenten Stopfjitters zu erwarten ist. Sie ist nun in eine Schaltung, deren Funktionseinheiten im Zeitbereich arbeiten, zu transformieren und als Ergänzung für eine Schaltung mit den eingangs angegebenen Merkmalen darzustellen.

Eine solche Schaltung ist in Fig. 4 abgebildet. Auf einer Leitung 1 wird das Signal mit niederer Bitrate - hier 2,048 Mb/s - der Anordnung im CMI-Code zugeführt. Durch eine Eingangsschaltung 5 wird das Signal vom Leitungscode in den Binärcode zurücktransformiert und die hierfür nötigen Takte erzeugt. Die Eingangsschaltung enthält eine Phasenregelschleife mit einem Phasenvergleicher 51, einem Regler 52, Taktmittel 53, die einen Oszillator umfassen und einem als Teiler operierenden Zähler 55. An dem Teiler 55 ist ein weiterer, als Teiler operierender Zähler 56 angeschlossen. Die von den Zählern bzw. Taktteilern 55 und 56 untersetzten Takte werden dem Decoder 54 zugeführt. Am Ausgang des Teilers 56 liegt der Bittakt des decodierten Signals an, mit dem ein Schreibzähler 6 inkremetiert wird. Der Schreibzähler erzeugt Schreibadressen, unter denen die Bits des Eingangssignals in einem Pufferspeicher 2 abgelegt werden. Auf einer Ausgangsleitung 3 verläßt das Signal mit höherer Bitrate - im Beispiel 2,304 Mb/s - den Pufferspeicher 2 seriell. Dieses Signal enthält Rahmeninformationen, feste Stopfbits sowie positive oder negative Stopfbits (variable Stopfbits). Ausgelesen werden diese Bits aus dem Pufferspeicher 2 mit Hilfe eines Lesezählers 8, der die Adressen für den Lesevorgang erzeugt. Eine Steuerschaltung 10 steuert den Lauf des Lesezählers 8. Soll zum Beispiel ein Bit mehr in das Signal auf der Leitung 3 eingebaut werden, hält die Steuerschaltung den Lesezähler für einen Takt an. Die Steuerschaltung besteht aus einem Quantisierer 101, einem Verzögerungsglied 102 mit der Verzögerung einer Rahmenperiode, einer Verknüpfungsschaltung 103 sowie einem Rahmenzähler 104. Genaueres über die Funktionsweise des Rahmenzählers mit seinen angeschlossenen Bausteinen 101, 102 und 103 findet man in der DE 39 42 883 und in der DE 39 42 885. Durch einen Serien-Parallel-Wandler 4, der ebenfalls von der Steuerschaltung 10 gesteuert wird, wird das Signal mit höherer Bitrate byteweise an einen Multiplexer 110 weitergegeben.

Ein Phasenvergleicher 7 bildet die Differenz zwischen den Ständen des Schreibzählers 6 und denen des Lesezählers 8, also die Phasendifferenz zwischen Eingangs- und Ausgangssignal des Pufferspeichers 2. Ohne die Verbindungen zwischen den Zählern 55 und 56 zum Phasenvergleicher 7 ermittelt der Phasenvergleicher eine ganze Zahl, die angibt, um wieviel Bits sich zum Zeitpunkt der Ermittlung die Phase des Eingangssignalsdes Pufferspeichers von der des Ausgangssignals unterscheidet. Um diesen Unterschied genauer angeben zu können, werden dem Phasenvergleicher 7 die Stände der Zähler 55 und 56 zugeführt, die als Einheit gesehen, den Stand eines Zählers wiedergeben, der mit einer wesentlich höheren Frequenz als der Taktfrequenz des Eingangssignals inkrementiert werden. Diese schnellaufenden Zähler werden dazu verwendet, um die Nachkommastellen des Phasenunterschiedes zwischen dem Signal auf der Leitung 1 und dem Signal auf der Leitung 3 zu ermitteln. Über eine Ausgangsleitung des Phasenvergleichers wird diese genaue Phasendifferenz einem Regler 9 zugeführt. Der Regler 9 besteht aus einem Summierglied 91 sowie einem Verzögerungsglied 92 mit der Verzögerung von einer Rahmenperiode. Das Summierglied hat vier Eingänge; dem einen wird das Ausgangssignal des Verzögerungsgliedes 92 zugeführt, dem anderen das Ausgangssignal des Phasenvergleichers 7 und den beiden anderen in binärer Form die Zahl der positiven oder negativen Stopfbits, die beim nächsten Stopfvorgang in das Signal mit höherer Bitrate eingefügt werden sollen. Diese Zahl ist positiv für positive Stopfbits und negativ für negative Stopfbits, sie wird aus der Stopfanforderung hergeleitet, die über Leitungen 10a und 10b an den nicht gezeigten Multiplexer 110 weitergegeben werden.

Das Ausgangssignal des Reglers 9 wird einem Quantisierer oder Schwellwertdetektor 101 zugeführt, an dessen Ausgang die Stopfinformation anliegt. Im vorliegenden Beispiel wurde davon ausgegangen, daß nach der Positiv-Negativ-Stopftechnik gestopft wird.

Der Regler 9 stellt eine Transformation der Funktionseinheit B6 der Fig. 3 vom z-Bereich in den Zeitbereich dar. Die Rückkopplung über die Leitung 7 der Fig. 3 ist die Rückkopplung des Verzögerungsgliedes 102 auf das Summierglied 91.

Bei den beschriebenen Signaltransformationen ist es nicht erforderlich, alle mit diskreten Bausteinen vorzunehmen, sondern sie können ganz oder teilweise von einem Signalprozessor übernommen werden, dessen Programmierung für den Fachmann auf der Hand liegt, sobald eine Schaltungsanordnung nach Fig. 4 als Vorlage dient.

**Patentansprüche**

1.  Schaltungsanordnung zur Bitratenanpassung zweier Signale, von denen das Signal mit höherer Bitrate (3) nach Rahmen strukturiert ist, wobei zur Einordnung von positiven oder negativen Stopfbits zwischen die Bits des Signals mit niederer Bitrate (1) ein Pufferspeicher (2), ein Schreib- und ein Lesezähler (6, 8) sowie ein Phasenvergleicher (7) und eine Steuerschaltung (10) vorgesehen sind, <u>dadurch gekennzeichnet,</u>

    1.1 daß zur Bestimmung der Nachkommastellen des Phasenunterschiedes zwischen dem Schreib- und Lesezähler (6, 8) Ausgänge eines weiteren Zählers (55, 56) mit dem Phasenvergleicher (7) verbunden sind,
    daß Taktmittel (53) zum Takten des weiteren Zählers (55, 56) mit einem Vielfachen des Bittaktes des Signals mit niederer Bitrate (1) vorgesehen sind,

    1.2 daß in einem Regelkreis zur Regelung des Taktes für den Lesezähler (8) ein Regler (9) vorgesehen ist, der mit dem Ausgang des Phasenvergleichers (7) gekoppelt ist,

    daß der Ausgang des Reglers (9) über einen Quantisierer (101) mit dem Eingang eines Verzögerungsgliedes (102) verbunden ist und

    daß der Ausgang des Verzögerungsgliedes (102) auf einen Eingang des Reglers (9) rückgekoppelt ist.

2.  Schaltungsanordnung nach Anspruch 1, <u>dadurch gekennzeichnet,</u>
    daß der Regler (9) einen Akkumulator (91, 92) enthält, dessen Summierglied (91) das Ausgangssignal des Phasenvergleichers (7) zum Ausgangssignal des Verzögerungsgliedes (102) hinzuaddiert.

3.  Schaltungsanordnung nach Anspruch 1 oder 2, <u>dadurch gekennzeichnet,</u>
    daß zur Signalumformung ein Signalprozessor vorgesehen ist.

**Claims**

1.  Circuit arrangement for adapting the bit rates of two signals, the signal with the higher bit rate (3) of which is structured in frames, a buffer (2), a write and a read counter (6, 8) and a phase comparator (7) and a control circuit (10) being provided for arranging positive or negative stuffing bits between the bits of the signal having the lower bit rate (1), characterized

    1.1 in that, for determining the positions after the decimal point of the phase difference between the write and read counters (6, 8), outputs of a further counter (55, 56) are connected to the phase comparator (7),
    in that clock means (53) for clocking the further counter (55, 56) with a multiple of the bit clock of the signal having the lower bit rate (1) are provided,

    1.2 in that, in a control loop for controlling the clock for the read counter (8), a controller (9) is provided which is coupled to the output of the phase comparator (7),

        in that the output of the controller (9) is connected to the input of a delay section (102) via a quantizer (101), and

        in that the output of the delay section (102) is fed back to an input of the controller (9).

2.  Circuit arrangement according to Claim 1, characterized in that the controller (9) contains an accumulator (91, 92), the summing section (91) of which adds the output signal of the phase comparator (7) to the output signal of the delay section (102).

3.  Circuit arrangement according to Claim 1 or 2, characterized in that a signal processor is provided for signal conversion.

**Revendications**

1.  Circuit d'adaptation du débit binaire de deux signaux, dont le signal à débit binaire (3) le plus élevé est structuré en trames, dans lequel, en vue de l'introduction de bits de bourrage positifs ou négatifs entre les bits du signal de plus faible débit binaire (1), sont prévus une mémoire-tampon (2), un compteur d'écriture et un compteur de lecture (6, 8) ainsi qu'un comparateur de phase (7) et un circuit de commande (10), caractérisé

    1.1 en ce qu'en vue de la détermination de la position de la virgule de la différence de phase entre le compteur d'écriture et le compteur de lecture (6, 8) les sorties d'un autre compteur (55, 56) sont reliées au comparateur de phase (7),

en ce que des moyens d'horloge (53) sont prévus afin de rythmer l'autre compteur (55, 56) à un multiple de la fréquence de bit du signal de plus faible débit binaire (1),

1.2 en ce que dans un circuit de régulation de l'horloge pour le compteur de lecture (8) est prévu un régulateur (9) qui est couplé avec la sortie du comparateur de phase (7),

en ce que la sortie du régulateur (9) est reliée par l'intermédiaire d'un quantificateur (101) à l'entrée d'un élément de retard (102) et

en ce que la sortie de l'élément de retard (102) est couplé en rétroaction avec une entrée du régulateur (9).

2. Circuit selon la revendication 1, caractérisé en ce que le régulateur (9) contient un accumulateur (91, 92), dont l'élément de sommation (91) additionne le signal de sortie du comparateur de phase (7) au signal de sortie de l'élément de retard (102).

3. Circuit selon la revendication 1 ou 2, caractérisé en ce qu'un processeur de signaux est prévu en vue de la conversion des signaux.

# FIG.1

# FIG.2

FIG. 3

FIG. 4